# EUROPÄISCHE PATENTSCHRIFT

(11) **EP 1 694 047 B1**
(45) Veröffentlichungstag und Bekanntmachung des Hinweises auf die Patenterteilung: **18.03.2020**
(21) Anmeldenummer: 06001004.8
(22) Anmeldetag: 18.01.2006
(51) Int. Cl.: H04N 1/028

(54) **Beleuchtungseinrichtung für ein Farbmessgerät**
Lighting system for a colour measuring device
Dispositif d'éclairage destiné à un colorimètre

(30) Priorität: 16.02.2005 CH 2642005; 28.02.2005 CH 3402005
(43) Veröffentlichungstag der Anmeldung: 23.08.2006
(73) Patentinhaber: X-Rite Switzerland GmbH, 8105 Regensdorf (CH)
(72) Erfinder: Frick, Beat, 8107 Buchs (CH)
(74) Vertreter: SSM Sandmair

(56) Entgegenhaltungen:
- EP-A- 0 764 836
- EP-A- 1 150 361
- EP-A- 1 278 049
- EP-A- 1 314 972
- US-A1- 2004 051 061
- US-A1- 2004 066 140

## Beschreibung

Die Erfindung betrifft eine Beleuchtungseinrichtung für ein Farbmessgerät gemäss dem Oberbegriff des unabhängigen Anspruchs 1.

Speziell befasst sich die vorliegende Erfindung mit einer Beleuchtungseinrichtung zum Einsatz in punkt- oder linienförmig abtastenden Spektralfotometern.

In der EP-A 1 507 134 (entsprechend US-Patentanmeldung Ser.No. 10/894797 vom 20.07.2004) ist ein Spektralfotometer beschrieben, das für den Einbau in farbtaugliche Reproduktionsgeräte, insbesondere Farbdrucker, ausgebildet ist. Das eingebaute Spektralfotometer ermöglicht die vollständige Charakterisierung (Tintenlimitierung, Linearisierung, Profilierung) des Reproduktionsgeräts für alle Medien (Tinten, Papier) ohne zusätzliche Hilfsgeräte und manuelle Messvorgänge.

Ein für diesen Einsatz geeignetes Messgerät bzw. Spektralfotometer muss sehr hohen Anforderungen genügen. Neben den üblichen Anforderungen bezüglich genormter Messgeometrie, Spektralbereich, Genauigkeit und Konstanz (Repetierbarkeit der Messergebnisse) muss es spektrale Daten, farbmetrische Daten und genormte oder spezifische Farbdichte-Daten liefern können. Darüberhinaus bestehen aber bei einem Einbaugerät noch Einschränkungen bezüglich der Einbaumasse (kompakte Form) und ggf. des Gewichts. Ferner bestehen erhöhte Ansprüche bezüglich Umgebungsbedingungen (Temperatur, Feuchtigkeit) und Verschmutzungsgefahr in der Umgebung des Druckwerks (Staub, Farbnebel etc.). Ferner kann die Messung nicht in direktem körperlichen Kontakt mit dem Medium erfolgen, weil z.B. bei Tintenstrahldruckern der Druck noch eine gewisse Zeit feucht und mechanisch empfindlich ist. Ein Einbaugerät muss auch unempfindlich gegenüber mechanischen Erschütterungen sein und langlebige Lichtquellen aufweisen. Da der Abstand zum Messobjekt wegen des unzulässigen direkten körperlichen Kontakts mit dem Messgerät Schwankungen unterworfen ist, muss das Messgerät auch damit umgehen können. Schliesslich spielen noch Service-Freundlichkeit und kommerzielle Kriterien eine wesentliche Rolle, da solche Messgeräte in grossen Stückzahlen benötigt werden und deshalb relativ kostengünstig herstellbar sein müssen. Insbesondere ist es dazu erforderlich, dass der Zusammenbau mit geringstem Montage- und Justieraufwand erfolgen kann.

Die genannten Anforderungen und Einschränkungen stellen auch erhöhte Ansprüche an die Beleuchtungseinrichtung des Messgeräts.

Das in der EP-A 1 507 134 (entsprechend US-Patentanmeldung Ser.No. 10/894797 vom 20.07.2004) beschriebene Spektralfotometer ist mit einer Beleuchtungseinrichtung ausgestattet, die eine oder mehrere Lichtquellen in Form von einzelnen Leuchtdioden umfasst. Dabei kann auch eine im UV-Bereich emittierende Leuchtdiode vorgesehen sein und einige Leuchtdioden können zu einem Flächenstrahler zusammengefasst sein. Diese bekannte Beleuchtungseinrichtung erfüllt die genannten Anforderungen zwar schon recht gut, ist aber in mancher Hinsicht noch verbesserungsfähig.

EP 1 314 972 A1 beschreibt ein Spektralphotometer und seine Verwendung. Das Spektralphotometer umfasst einen optischen Messkopf, ein Spektrometer und eine Steuerelektronik. Der Messkopf ist mit einer mehrkanaligen Beleuchtungsanordung ausgestattet, die als spektral kontinuierliche Lichtquelle ausschließlich Leuchtdioden enthält. Jeder Beleuchtungskanal enthält eine Leuchtdiode, wobei jede Leuchtdiode separat ansteuerbar ist. Der Messkopf enthält ferner einen vorzugsweise telezentrisch ausgelegten Sammelkanal zur Erfassung des von der Probe remittierten oder emittierten Messlichts und zur Einkopplung desselben in das Spektrometer. Die Beleuchtungskanäle sind ringförmig um die optische Achse des Messkopfs angeordnet und beleuchten die Probe unter verschiedenen Einfallswinkeln. Der Messkopf enthält mindestens eine weiß abstrahlende Leuchtdiode und zusätzlich noch Leuchtdioden mit unterschiedlichen Emissionsspektren sowie auch UV-Leuchtdioden. In Kombination mit der Steuerelektronik ist dadurch eine Beleuchtung mit elektronisch einstellbarer Spektralcharakteristik realisiert. Für eine kontaktlose Messung sind Mittel zur Bestimmung der Messdistanz und eine distanzabhängige numerische Korrektur der Messwerte vorgesehen. EP 1 150 361 A1 beschreibt eine Weiß licht emittierende Diode (LED), die Primärlicht mit einer Wellenlänge emittiert, die im Bereich von 485 bis 515 Nanometer liegt, was einer bläulich-grünen Farbe entspricht. Ein Teil des Primärlichts wird in ein rötlich gefärbtes Licht umgewandelt, dessen Wellenlänge im Bereich von ungefähr 600 bis ungefähr 620 nm liegt. Zumindest ein Teil des umgewandelten Lichts kombiniert sich mit dem nicht umgewandelten Teil des Primärlichts, um weißes Licht zu erzeugen. Eine Anzahl von Leuchtstoffkonvertierungselementen ist zur Verwendung mit der LED geeignet, einschließlich eines mit einem Leuchtstoffpulver gemischten Harzes, mit einem Leuchtstoffpulver vermischten Epoxiden, organischen Lumineszenzfarbstoffen, dünnen Leuchtstoffkonvertierungsfilmen und Leuchtstoffkonvertierungssubstraten. Vorzugsweise ist das Leuchtstoffumwandlungselement ein Harz, das mit einem Leuchtstoffpulver derart vermischt ist, dass ein Teil des auf das Harz auftreffenden Primärlichts in rötlich gefärbtes Licht umgewandelt wird und ein Teil des Primärlichts das Harz ohne passiert umgewandelt werden. Das nicht umgewandelte Primärlicht und das mit Phosphor umgewandelte rötlich gefärbte Licht erzeugen zusammen weißes Licht. Die LED ist in einem Reflektorbecher montiert, der mit dem Phosphor umwandelnden Harz gefüllt ist. Die LED kann entweder in einer normalen oder einer Flip-Chip-Konfiguration in der Reflektorschale montiert sein.

### ZUSAMMENFASSUNG DER ERFINDUNG

Die Erfindung ist durch den Gegenstand des unabhängigen Anspruchs 1 definiert. Vorteilhafte Weiterbildungen sind Gegenstand der abhängigen Ansprüche.

### VORTEILE DER ERFINDUNG

Vorteilhaft ist eine Beleuchtungseinrichtung der gattungsgemäßen Art bereitgestellt, die hinsichtlich Leistungsfähigkeit, Präzision, relativer Einfachheit der Herstellung und Universalität der Einsatzmöglichkeiten verbessert ist.

Im Folgenden wird die Erfindung anhand der Zeichnung näher erläutert. Es zeigen:
- Fig. 1: eine teilweise aufgeschnittene Ansicht eines ersten Ausführungsbeispiels der erfindungsgemässen Beleuchtungseinrichtung in Verbindung mit dem Aufpickkopf eines Spektralfotometers,
- Fig. 2: eine Unteransicht der Beleuchtungseinrichtung der Fig. 1,
- Fig. 3: einen Schnitt nach der Linie III-III der Fig. 2,
- Fig. 4: eine Unteransicht eines zweiten Ausführungsbeispiels der erfindungsgemässen Beleuchtungseinrichtung,
- Fig. 5: eine ausschnittsweise Ansicht einer Linienabtastvorrichtung mit zwei Beleuchtungseinrichtungen gemäss Fig. 4 und
- Fig. 6: eine Unteransicht einer vorteilhaften Weiterbildung der Beleuchtungseinrichtung der Fig. 2.

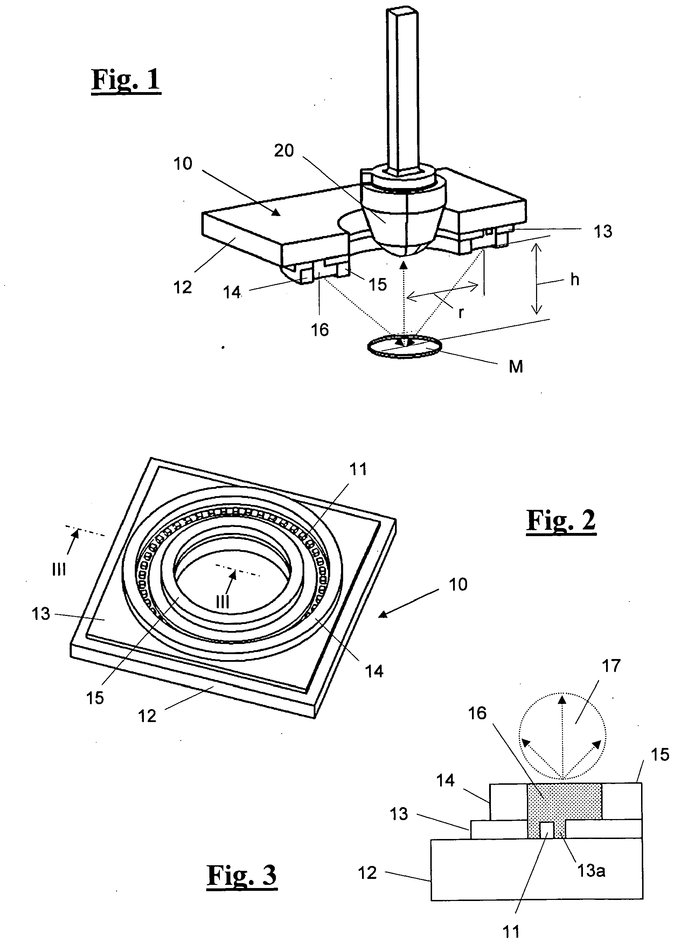

Die in Fig. 1 dargestellte Beleuchtungseinrichtung ist als Ringbeleuchtung ausgebildet und als solche besonders geeignet für den Einsatz in Einzelmesspunkte abtastenden Farbmessgeräten, insbesondere Spektralfotometern. Die Figur zeigt den Messlicht-Aufpickkopf 20 eines z.B. in der EP-A 1 507 134 beschriebenen Spektralfotometers, um welchen herum die Beleuchtungseinrichtung koaxial angeordnet ist.

Wie insbesondere auch aus den Figuren 2 und 3 erkennbar ist, umfasst die als Ganze mit 10 bezeichnete Beleuchtungseinrichtung eine grosse Zahl von einzelnen Leuchtdioden-Chips 11, die dicht gepackt in einem schmalen und eng definierten Kreisring angeordnet sind, welcher die optische Achse des Aufpickkopfs 20 koaxial umgibt. Die typische Grösse der einzelnen Leuchtdioden-Chips beträgt etwa 0,4 ^{∗} 0,4 ^{∗} 0,4 mm³. Die Ebene des Leuchtdiodenrings steht im praktischen Einsatz senkrecht zur optischen Achse des Aufpickkopfs 20 und ist damit parallel zur Messebene M ausgerichtet.

Der mechanische Aufbau der in diesem Beispiel ringförmigen Beleuchtungseinrichtung 10 ist aus der Schnittdarstellung der Fig. 3 erkennbar. Auf einer gut wärmeleitenden Grundplatte 12 befinden sich eine Leiterplatte 13 und darauf zwei koaxiale Ringwände 14 und 15. In der Leiterplatte ist eine ringförmige Nut 13a ausgespart.

Die Leuchtdioden-Chips 11 sind in der Nut 13a angeordnet und direkt auf die Grundplatte 12 geklebt ("dye bonding"). Die elektrischen Anschlüsse der Leuchtdioden-Chips 11 sind mittels nicht dargestellter feiner Drähte mit entsprechenden Kontaktflächen der Leiterplatte 13 verbunden ("wire bonding"), welche die Verbindung zu einer hier nicht dargestellten äusseren elektronischen Steuerung herstellt, wobei auch eine selektive Ansteuerung der einzelnen Leuchtdioden 11 und/oder von Gruppen von Leuchtdioden 11 vorgesehen sein kann. Der Zwischenraum zwischen den beiden Ringwänden 14 und 15 ist mit einem Harz 16 vergossen, welches ein Konverter-Material (Phosphor) zur Umwandlung gewisser Wellenlängenbereiche des von den Leuchtdioden abgestrahlten Lichts in andere Wellenlängenbereiche enthält. Dies wird weiter unten noch näher erläutert. Von der Oberfläche des Harz-Vergusses 16 strahlt das Beleuchtungslicht mit Cosinus-Charakteristik (Lambert-Strahler) ab, was in der Fig. 3 durch die Pfeile 17 angedeutet ist. Die Hauptstrahlungsrichtung (Strahlungskeule) steht dabei senkrecht zur Ebene des Leuchtdiodenrings.

Der Einsatz von Leuchtdioden (LEDs) als Lichtquellen für die Beleuchtungsanordnung hat viele Vorteile. LEDs sind langlebig und lassen sich schnell und während sehr kurzer Zeit ein- und ausschalten, wodurch sie dementsprechend stromsparend sind. Durch Takten der Beleuchtung und durch Differenzbildung einer Messung mit LEDs "ein" und einer folgenden Messung mit LEDs "aus" kann der Fremdlichteinfluss während der Messung eliminiert werden. LEDs emittieren keine Wärmestrahlung (IR) in den beleuchteten Bereich. LEDs sind in spezifischen Spektralbereichen erhältlich, z.B. Weiss, UV, R, G, B, etc.. Typische kommerziell erhältliche Leuchtdioden-Produkte sind die Lumiled Emitter, Osram Golden Dragon, Cree XLamp etc..

In der Ringbeleuchtung der Fig. 2 sind blaue LEDs Chips (bei ca. 450 nm) und/oder UV-LEDs (bei ca. 390 nm) eingesetzt und gemeinsam mit einem Harz mit Konverter (Phosphor) überdeckt. Durch die dichte Besetzung und die schmale, eng definierte Zeilenform wird eine hohe Leuchtdichte erreicht.

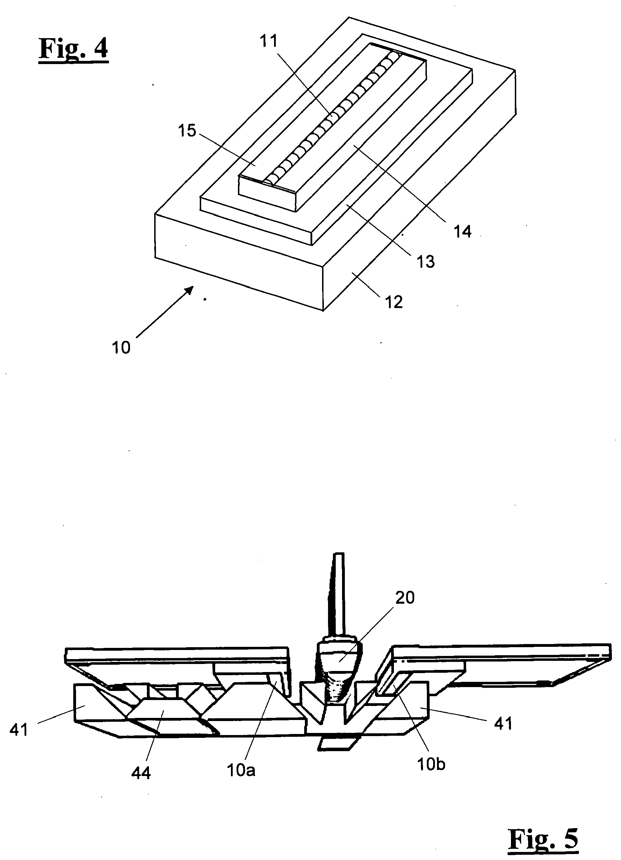

Das erfindungsgemässe Konzept der eng besetzten LED-Linie und des gemeinsamen Vergusses der LEDs mit Konverter enthaltendem Harz ist selbstverständlich nicht auf Ringbeleuchtungen beschränkt. Beispielsweise kann nach demselben Prinzip auch eine gerade Linienbeleuchtung aufgebaut werden, wie sie beispielsweise in Zeilenabtastgeräten erforderlich ist. Die Fig. 4 zeigt ein als solche gerade Linienbeleuchtung ausgebildetes Ausführungsbeispiel der erfindungsgemässen Beleuchtungseinrichtung. Der Aufbau ist analog der Ringbeleuchtung, so dass keine nähere Erläuterung erforderlich ist.

Je nach Einsatzzweck kann es auch vorteilhaft sein, die Leuchtdioden längs einer stückweise geraden oder anderswie gekrümmten Linie anzuordnen.

In der Figur 5 sind die relevanten Teile eines Beispiels einer Zeilenabtastvorrichtung dargestellt, wobei die Längsrichtung der Abtastvorrichtung im wesentlichen senkrecht zur Zeichenebene verläuft. Zu erkennen sind linienförmig hintereinander angeordnete Aufpickköpfe 20 analog demjenigen in Fig. 1, zwei gerade Linien-Beleuchtungseinrichtungen 10a und 10b und eine Hellreferenzanordnung mit einem Verschiebeschlitten 41 und einer darauf angeordneten, langgestreckten, im Querschnitt trapezförmigen Umlenkanordnung 44 in Messposition, also ausserhalb des Beleuchtungs- und Aufpickstrahlengangs. Die Umlenkanordnung 44 dient, wenn sie sich im Strahlengang befindet, als Hellreferenz und lenkt das von den beiden Beleuchtungseinrichtungen 10a und 10b kommende Licht in die Aufpickköpfe 20. Für die vorliegende Erfindung ist die Umlenkanordnung 44 nicht relevant.

Das erfindungsgemässe Beleuchtungskonzept mit dicht gepackten Leuchtdioden-Linien (gerade oder kreisförmige Anordnung) ermöglicht die optimale Anpassung der Beleuchtung an spezifische Einsatzbedingungen. Die Beleuchtungsanordnung kann mit engen Toleranzen sehr einfach und kostengünstig hergestellt werden.

Für den Einsatz in einem punktförmig messenden Spektralfotometer ist eine Ringbeleuchtung messtechnisch optimal, weil dadurch die vorgegebenen Beleuchtungsgeometrie-Normen am besten erfüllt sind und dabei gleichzeitig der höchste Lichtfluss im Messfleck erreicht wird. Für Zeilenmessgeräte ist eine Zeilenbeleuchtung mit zwei symmetrisch angeordneten Beleuchtungslinien optimal.

In den linearen oder zirkularen LED-Zeilen der Beleuchtungseinrichtung 10 können gemäss einem weiteren vorteilhaften Aspekt der Erfindung verschiedene LED Typen (R, G, B, UV) in Bereichen (Linien-Abschnitten oder Kreissegmenten) angeordnet werden und/oder je mit Harz mit unterschiedlichen Konverter-Typen oder ev. auch ganz ohne Konverter vergossen werden. Beispielsweise erzeugt ein Bereich mit individuell schaltbaren UV-LEDs ohne Konverter reines UV Licht zur gezielten Anregung und Messung von Aufhellern im Papier. Ein Bereich mit individuell schaltbaren R, G, B - LEDs ohne Konverter erzeugt Licht in einem engen Spektralbereich und dient zur gezielten Dichtemessung. (Wenn nur in einem engen Spektralbereich beleuchtet wird, ist das Reststreulicht im Spektrometer stark reduziert.) Bereiche mit schaltbaren blauen oder UV- LEDs und vergossen mit spezifischen R, G, B Konvertern erzeugen ebenso Licht in einem engen Spektralbereich, der zur gezielten DichteMessung verwendbar ist.

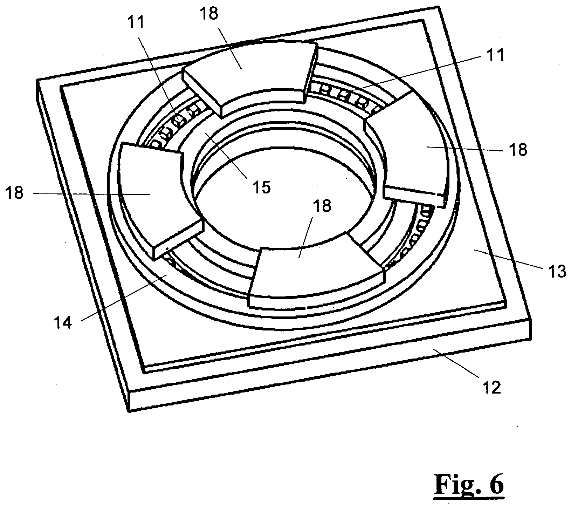

In den linearen oder zirkularen LED-Zeilen können verschiedene Bereiche (Linien-Abschnitte oder Kreissegmente) mit verschiedenen Filtern wie Polarisations-, R-, G-, B- oder UV-Filtern überdeckt werden, wie dies in der Fig. 6 am Beispiel der Ringbeleuchtung dargestellt ist. Die Filter sind darin mit 18 bezeichnet. Messtechnisch ist die gezeichnete 4-zählige Symmetrie bevorzugt.

Beispielsweise emittiert ein Bereich mit individuell schaltbaren LEDs, der mit einem Polarisationsfilter überdeckt ist, polarisiertes Licht, ein anderer Bereich mit individuell schaltbaren LEDs ohne Polarisationsfilter emittiert unpolarisiertes Licht. Die Umschaltung von polarisiertem zu unpolarisiertem Licht kann somit rein elektrisch durch entsprechendes Ein- und Ausschalten der betreffenden LEDs erfolgen, die aufwändige mechanische Umschaltung entfällt. Für diese Anwendung muss im Aufpickkanal ein gekreuzter Polarisationsfilter als Analysator fest integriert sein, der aber bei unpolarisierter Messung nicht stört.

Ein anderer Bereich mit schaltbaren weissen LEDs, der mit einem R, G oder B Filter überdeckt ist, emittiert in einem schmalen Spektralbereich und dient wiederum zur Verbesserung der Dichtemessung.

Ein weiterer individuell schaltbarer Bereich mit UV Filter erlaubt bei Verwendung von sehr breitbandigen weissen LEDs (mit Emission von 380 nm UV - 730 nm tiefrot) durch Ansteuerung des entsprechenden Bereiches den UV-Anteil elektrisch zu- und abzuschalten.

Die Ansteuerung der LEDs in den einzelnen Bereichen der Beleuchtungsanordnung erfolgt, wie schon erwähnt, über eine elektronische Steuerung, die ggf. entsprechende Befehle von einer übergeordneten internen oder externen Steuerung erhält.

Für messtechnische Einsätze geeignete Leuchtdioden und dazu passende Konverter-Materialien sind in der Fachliteratur und den Datenblättern der einschlägigen Hersteller (z.B. Lumiled) beschrieben. Eine umfassende Übersicht über den diesbezüglichen Stand der Technik wurde in einem Referat "Leuchtstoffe für weisse LED in der Allgemeinbeleuchtung" von Dr. Stefan Tews (Litec LLL GmbH, Greifswald, Deutschland) im Rahmen einer VDI-Tagung 2004 gegeben.

Für die Erfindung werden weisse LEDs mit YAG-Leuchtstoffen oder bevorzugt Ortho-Silikatleuchtstoffen (BOSE) als Konverter (Phosphore) eingesetzt. Diese Leuchtstoffe sind in verschiedenen Farben herstellbar und können auch gemischt werden, die Absorption und die Emission sind spektral getrennt. Die Leuchtstoffe können von blau (ca. 450 nm) bis UV (ca. 390 nm) gepumpt werden.

Gemäss Seite 25 des Referats stellt die Kombination einer blauen LED (452 nm) mit zwei BOSE-LS-Konvertern (blau-grün, 508 nm und tief-orange, 595 nm) eine massive Verbesserung gegenüber YAG dar. Wesentlich ist dabei, dass das Minimum zwischen dem LED-Emissionsmaximum bei ca. 450 nm und der Konverter-Emission oberhalb 500 nm weitgehend vermieden wird.

Auf Seite 26 des Referats ist das Spektrum der "besten" Kombination einer UV-LED mit einer Mischung diverser Konverter dargestellt. Dabei ist das Spektrum von 400 nm bis 700 nm gut abgedeckt und die Farbwiedergabe (Color Rendering Index) hervorragend. Die LED strahlt bei 392 nm, als Konverter werden die Typen BAM (blau, 450 nm), BOSE (grün, 515 nm), BOSE (orange, 593 nm) und Silikat-Germanat-LS (rot, 657 nm) eingesetzt.

Diese LED-Konverter-Kombination ist besonders vorteilhaft, weil dabei eine UV-LED verwendet wird, die auch als als UV Quelle zur gezielten Anregung von Papier-Aufhellern eingesetzt werden kann.

In zahlreichen Einsatzfällen eines Farbmessgeräts oder Spektralfotometers, z.B. für die Messung eines Druckbogens, muss die Abtastung kontaktlos erfolgen. Die Auflagefläche des Bogens ist über die relativ grosse Bogenfläche in der Regel nicht perfekt eben. Es treten deshalb beim Einmessen Abstandsänderungen auf. Diese dürfen die Messwerte nicht beeinflussen. Dies erfordert, dass die Beleuchtungseinrichtung 10 und der Aufpickkopf 20 über den tolerierten Bereich von ein paar Zehntelmillimetern abstandsunabhängig sein müssen.

Das Sichtfeld des Aufpickkopfs wird von der Beleuchtungseinrichtung überleuchtet. Da die Erfassungswinkel des Aufpickkopfs sehr eingeschränkt sind (gemäss den Farbmessnormen sind nur Erfassungswinkel von +/- 5° tolerierbar), wird damit die Leucht- oder Strahldichte im Messfeld gemessen, welche unabhängig vom Abstand ist. Es muss also nur die Beleuchtungseinrichtung eine konstante, vom Abstand unabhängige Bestrahlungsstärke erzeugen.

Eine geeignete Lösung für eine abstandsunabhängige Beleuchtung unter 45° ist bereits in der eingangs schon erwähnten EP-A 1 507 134 (entsprechend US-Patentanmeldung Ser.No. 10/894797 vom 20.07.2004) beschrieben. Dabei ist eine Strahlungsquelle mit Lambertscher Abstrahlcharakteristik parallel zur Ebene des Messfelds angeordnet. Die Position der Strahlungsquelle relativ zum Messfeld wird so gewählt, dass das Licht im Winkel von 45° auf das Messfeld trifft. Gemäss dem photometrischen Grundgesetz wird so eine Abstandsunempfindlichkeit über einen für die Praxis ausreichend grossen Abstandsvariationsbereich realisiert.

Die erfindungsgemässe Ringbeleuchtungsanordnung ist nach genau denselben Grundsätzen aufgebaut und positioniert. Die Abstandsunabhängigkeit ist dann erreicht, wenn die Ebene des Leuchtdioden-Rings parallel zur Messebene liegt und der Abstand a des Rings von der Messebene gleich dem Radius r des Rings gewählt wird (Fig. 1). Bei der Ausbildung der Beleuchtungsanordnung als gerade Leuchtdioden-Zeile ist die Abstandsunabhängigkeit in ausreichender Näherung erfüllt, wenn der Abstand der Leuchtdioden-Zeile von den optischen Achsen der Aufpickköpfe gleich gross ist wie der Abstand zur Messebene.

## Patentansprüche

1. Beleuchtungseinrichtung (10) für ein Farbmessgerät oder ein punkt- oder linienförmig messendes Spektralfotometer,
wobei das Farbmessgerät oder Spektralfotometer mehrere Lichtquellen in Form von Leuchtdioden-Chips (11) aufweist, die als Cosinus-Strahler ausgebildet sind, wobei die mehreren Lichtquellen als eine linienförmige Anordnung von Leuchtdioden-Chips (11) ausgebildet sind,
wobei viele einzelne Leuchtdioden-Chips (11) eng gepackt längs einer schmalen, eng definierten geraden, stückweise geraden oder gebogenen, speziell kreisförmigen Linie angeordnet sind,
wobei die linienförmige Anordnung einen Bereich oder mehrere Bereiche aufweist, wobei zumindest ein Bereich mehrere Leuchtdioden-Chips (11) aufweist, **dadurch gekennzeichnet, dass** die Leuchtdioden-Chips (11) in dem zumindest einen Bereich gemeinsam mit einem Harz (16) überdeckt sind, wobei in dem Harz (16) zumindest ein Konverter-Material zur Umwandlung des von den Leuchtdioden-Chips (11) abgestrahlten Lichts in andere Wellenlängenbereiche enthalten ist, wobei in verschiedenen Bereichen das Harz (16) ein unterschiedliches Konverter-Material aufweist.

2. Beleuchtungseinrichtung nach Anspruch 1, **dadurch gekennzeichnet, dass** sie Leuchtdioden (11) mit unterschiedlichen spektralen Charakteristiken aufweist.

3. Beleuchtungseinrichtung nach einem der vorangehenden Ansprüche, **dadurch gekennzeichnet, dass** sie UV-Licht emittierende und nicht UV-Licht emittierende Bereiche aufweist, wobei das UV-Licht vorzugsweise zur Anregung von Aufhellern in Papier geeignet ist.

4. Beleuchtungseinrichtung nach einem der vorangehenden Ansprüche, **dadurch gekennzeichnet, dass** sie mit Farbfiltern (18) versehene Bereiche aufweist.

5. Beleuchtungseinrichtung nach einem der vorangehenden Ansprüche, **dadurch gekennzeichnet, dass** sie mit Polarisationsfiltern (18) versehene Bereiche aufweist.

6. Beleuchtungseinrichtung nach einem der vorangehenden Ansprüche, **dadurch gekennzeichnet, dass** sie Weiss emittierende Bereiche und schmalbandig emittierende Bereiche aufweist.

7. Beleuchtungseinrichtung nach einem der vorangehenden Ansprüche, **dadurch gekennzeichnet, dass** sie Bereiche mit schmalbandigen Konverter-Materialien aufweist.

8. Beleuchtungseinrichtung nach einem der vorangehenden Ansprüche, **dadurch gekennzeichnet, dass** die schmalbandig emittierenden Bereiche speziell für Farbdichtemessungen ausgelegt sind.

9. Beleuchtungseinrichtung nach einem der vorangehenden Ansprüche, **dadurch gekennzeichnet, dass** sie als Konverter-Materialien Ortho-Silikatleuchtstoffe (BOSE) enthält.

10. Beleuchtungseinrichtung nach einem der vorangehenden Ansprüche, **dadurch gekennzeichnet, dass** die Leuchtdioden (11) einzeln und/oder gruppenweise selektiv ansteuerbar sind.

## Claims

1. Illumination device (10) for a colour measurement device or a pointwise or linewise measuring spectrophotometer, wherein the colour measurement device or the spectrophotometer has a plurality of light sources formed by light diode chips (11) which are formed as cosine emitters and the plurality of light sources are formed as a linear array of light diode chips (11), wherein many individual light diode chips (11) are disposed a tightly packed along a narrow, precisely defined linear, sectionwise linear or curved, in particular circular line, wherein the linear array has a region or a plurality of regions, wherein at least one region has a plurality of light diode chips (11), **characterized in that** the light diode chips (11) in the at least one region are collectively covered by a resin (16), wherein at least a converter material for converting the light emitted from the light diode chips (11) into other wavelengths regions is contained in the resin (16), the resin (16) has a different converter material.

2. Illumination device according to claim 1, **characterized in that** it has light diodes (11) with different spectral characteristics.

3. Illumination device according to one of the preceding claims, **characterized in that** it has UV light-emitting and non-UV light-emitting regions, wherein the UV light is suitable preferably for exciting brighteners in paper.

4. Illumination device according to one of the preceding claims, **characterized in that** it has regions provided with colour filters (18).

5. Illumination device according to one of the preceding claims, **characterized in that** it has regions provided with polarization filters (18).

6. Illumination device according to one of the preceding claims, **characterized in that** it has regions emitting white and regions emitting in a narrow band.

7. Illumination device according to one of the preceding claims, **characterized in that** it has regions with narrow band converter materials.

8. Illumination device according to one of the preceding claims, **characterized in that** the regions emitting in a narrow band are adapted specifically for colour density measurements.

9. Illumination device according to one of the preceding claims, **characterized in that** it comprises ortho silicate luminance materials (BOSE) as converter materials.

10. Illumination device according to one of the preceding claims, **characterized in that** the light diodes (11) are individually and/or group-wise selectively controllable.

## Revendications

1. Dispositif d'éclairage (10) pour un colorimètre ou un spectrophotomètre de mesure ponctuelle ou linéaire, dans lequel le colorimètre ou le spectrophotomètre comporte une pluralité de sources de lumière sous forme de puces de diodes électroluminescentes (11), qui sont conçues en tant qu'émetteur cosinus, ladite pluralité de sources de lumières étant conçue en tant qu'agencement linéaire de puces de diodes électroluminescentes (11), une pluralité de puces de diodes électroluminescentes (11) individuelles étant agencées selon un empilement serré le long d'une ligne étroite, droite étroitement définie, partiellement droite ou courbée, en particulier circulaire, l'agencement linéaire présentant une région ou plusieurs régions, au moins une région présentant plusieurs puces de diodes électroluminescentes (11), **caractérisé en ce que** les puces de diodes électroluminescentes (11) sont recouvertes dans l'au moins une région conjointement avec une résine (16), au moins un matériau de conversion étant contenu dans la résine (16) pour la transformation de la lumière émise par les puces de diodes électroluminescentes (11) dans d'autres régions de longueur d'onde, la résine (16) présentant dans différentes régions un matériau de conversion différent.

2. Dispositif d'éclairage selon la revendication 1, **caractérisé en ce qu'**il comporte des diodes électroluminescentes (11) avec différentes caractéristiques spectrales.

3. Dispositif d'éclairage selon l'une des revendications précédentes, **caractérisé en ce qu'**il comporte des plages émettant la lumière UV et n'émettant pas la lumière UV, la lumière UV étant de préférence appropriée pour l'excitation d'azurants dans le papier.

4. Dispositif d'éclairage selon l'une des revendications précédentes, **caractérisé en ce qu'**il comporte des régions dotées de filtres colorés (18).

5. Dispositif d'éclairage selon l'une des revendications précédentes, **caractérisé en ce qu'**il comporte des régions dotées de filtres de polarisation (18).

6. Dispositif d'éclairage selon l'une des revendications précédentes, **caractérisé en ce qu'**il comporte des régions d'émission blanche et des régions d'émission à bande étroite.

7. Dispositif d'éclairage selon l'une des revendications précédentes, **caractérisé en ce qu'**il comporte des régions avec des matériaux de conversion de bande étroite.

8. Dispositif d'éclairage selon l'une des revendications précédentes, **caractérisé en ce que** les régions d'émission à bande étroite sont spécialement conçues pour des mesures de densité de couleur.

9. Dispositif d'éclairage selon l'une des revendications précédentes, **caractérisé en ce qu'**il contient des luminophores d'orthosilicate (BOSE) comme matériaux de conversion.

10. Dispositif d'éclairage selon l'une des revendications précédentes, **caractérisé en ce que** les diodes électroluminescentes (11) peuvent être actionnées de manière sélective individuellement et/ou par groupes.
